(19) Europäisches Patentamt / European Patent Office / Office européen des brevets

(11) **EP 2 260 523 B1**

(12) **EUROPEAN PATENT SPECIFICATION**

(45) Date of publication and mention
of the grant of the patent:
**26.02.2014 Bulletin 2014/09**

(51) Int Cl.:
**H01M 2/16** (2006.01)     **H01M 10/052** (2010.01)

(21) Application number: **09730415.8**

(86) International application number:
**PCT/KR2009/001827**

(22) Date of filing: **08.04.2009**

(87) International publication number:
**WO 2009/125985 (15.10.2009 Gazette 2009/42)**

(54) **METHOD OF MANUFACTURING THE MICROPOROUS POLYOLEFIN COMPOSITE FILM WITH A THERMALLY STABLE LAYER AT HIGH TEMPERATURE**

VERFAHREN ZUR HERSTELLUNG EINES MIKROPORÖSEN POLYOLEFINVERBUNDSTOFFFILMS MIT EINER BEI HOHEN TEMPERATUREN WÄRMESTABILEN PORÖSEN SCHICHT

PROCÉDÉ DE FABRICATION DE FILM COMPOSITE POLYOLÉFINIQUE MICROPOREUX AVEC UNE COUCHE THERMIQUEMENT STABLE À HAUTE TEMPÉRATURE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **08.04.2008 KR 20080032887**
**08.04.2009 KR 20090030337**

(43) Date of publication of application:
**15.12.2010 Bulletin 2010/50**

(73) Proprietor: **SK Innovation Co., Ltd.**
**Jongno-gu**
**Seoul**
**110-110 (KR)**

(72) Inventors:
• **LEE, Jean**
  **Daejeon 302-775 (KR)**
• **SUNG, Jongmoon**
  **Daejeon 305-712 (KR)**
• **KIM, Yongkyoung**
  **Daejeon 305-810 (KR)**
• **LEE, Youngkeun**
  **Seoul 137-949 (KR)**

(74) Representative: **Albrecht, Thomas et al**
**Kraus & Weisert**
**Patent- und Rechtsanwälte**
**Thomas-Wimmer-Ring 15**
**80539 München (DE)**

(56) References cited:
**EP-A1- 1 905 586      EP-A2- 0 814 520**
**WO-A1-93/06626        JP-A- 2002 355 938**
**US-A1- 2007 128 512   US-A1- 2008 070 107**

## Description

### Technical Field

The present invention relates to a method of manufacturing a microporous polyolefin composite film which has excellent permeability and excellent thermal stability in high temperature electrolyte.

### Background Art

A polyolefin-based microporous film has been widely used as a battery separator, a separator filter, and a membrane for microfiltration, due to its chemical stability and excellent physical properties. Meanwhile, for the battery separator, the microporous structure is required to have a spatial separation function between positive and negative electrodes and a microporous structure for high ionic conductivity. Recently, it has been further required to enhance the characteristic of the separator for the thermal stability and electrical stability upon charging and discharging of the secondary battery, according to the tendency of the secondary battery toward the high-capacity and high-power. In case of the lithium secondary battery, if the thermal stability of the separator is deteriorated, the separator may be damaged or deformed by increase of temperature in the battery and thus an electrical short may occur between the electrodes.

Therefore, there is a risk that the battery may be overheated or ignited. The thermal stability of the battery is affected by shutdown temperature, meltdown temperature high temperature melt shrinkage rate and the like.

The separator having the excellent thermal stability at high temperature is prevented from being damaged at the high temperature, thereby preventing the electrical short between the electrodes. If the electrical short occurs between the electrodes due to dendrite generated during charging and discharging processes of the battery, the battery generates heat. At this time, in case of the separator having the excellent thermal stability at high temperature, it is prevented that the separator is damaged and thus the battery is ignited or exploded.

In order to increase the thermal stability of the separator, there have been proposed a method that crosslinks the separator, a method that adds inorganic particles, and a method that mixes a heat-resistant resin with a polyolefin resin or forms a coating layer.

The crosslinking method of the separator is disclosed in U.S. Patent No. 6,127,438 and 6,562,519. In these methods, a film is treated by electron beam crosslinking or chemical crosslinking. However, in case of the electron beam crosslinking, there are some disadvantages such as necessity for an electron beam crosslinking apparatus, a limitation of production speed, a variation in quality according to non-uniform crosslinking. And in case of the chemical crosslinking, there are also some disadvantages in that it has complicated extruding and mixing processes, and a gel may be generated at a film due to the non-uniform crosslinking.

Meanwhile, in U.S. Patent No. 6,949,315, there is disclosed a method of enhancing the thermal stability of the separator by mixing an ultra high molecular weight polyethylene with the inorganic particles like titanium oxide of 5 to 15 weight %. However, in this method, there are some disadvantages such as increase of extruding load, deterioration of the extruding and mixing ability, and occurrence of incomplete stretching due to using of the ultra high molecular weight polyethylene, as well as inferiority in the mixing, variation in quality and generation of pinholes due to using of the inorganic particles. Further, physical properties of the film are also deteriorated due to lack of interface compatibility between the inorganic matter and the high molecular resin.

In U.S. Patent No. 5,641,565, there is disclosed a method in which an excellent heat-resistant resin is mixed. In this method, an ultra high molecular weight resin having an average molecular weight of 1,000,000 or more is needed to prevent deterioration of the physical properties due to adding of polyethylene, polypropylene and inorganic particles. Further, since an additional is also needed to separate and remove the used the inorganic particles, the manufacturing process is very complicated.

In Japanese Patent Publication No. 2004-161899, there is disclosed a microporous film which contains polyethylene and non-polyethylene thermoplastic resin having excellent heat-resistance and being not completely melted but minutely dispersed when being mixed with the polyethylene. However, there is a disadvantage that the microporous film manufactured by this method has a non-uniform thickness due to particulate heat-resistant resin. If the microporous film has the non-uniform thickness, the defective proportion in assembling of battery is increased and thus the productivity is reduced. Also, after the assembling of battery, an electrical short occurs, thereby deteriorating safety.

In U.S. Patent No. 5,691,077 and Japanese Patent Publication No. 2002-321323, there are disclosed methods of forming additional layer on a polyolefin-based microporous film. In these methods, a polypropylene layer is provided by a dry or wet process, but a heat-resistant layer is stretched and it is difficult to basically prevent heat shrinkage due to limitation of a melting point of polypropylene. Therefore, there is limitation in manufacturing of a high heat-resistant separator. Further, in Korean Patent Publication No.2007-0080245 and International Publication No.WO2005/049318, polyvinyldene fluoride copolymer that is a heat-resistant resin is used as a coating layer so as to enhance the heat-resistance of the separator and the thermal stability of the battery. However, since the resin is easily dissolved or gelled in an organic solvent such as propylene carbonate, ethylene carbonate, diethyl carbonate, dimethyl carbonate, and ethyl methyl carbonate, which is used as a non-aqueous electrolyte of a battery, there is limitation in enhancing the thermal stability of the battery.

In Japanese Patent Publication No.2002-355938, there is disclosed a method of manufacturing a microporous polyolefin composite film in which a high heat-resistant resin is used. In this method, the high heat-resistant resin is applied to a polyolefin microporous film by the phase separation. However, it is difficult to provide efficient permeability by a pore forming method in which a single resin is phase-separated by a dry process when forming a coating layer of the film. Further, since phase separation size and uniformity are considerably changed according to the drying conditions such as humidity, temperature and so on, there is limitation in manufacturing the separator having uniform quality.

With respect to the heat-resistance as one of the main characteristics of the battery separator, the conventional methods have a limitation in the heat-resistance of the resin itself, or the applying of the heat-resistant resin does not contribute to the improvement of the heat-resistance of the separator. And other physical properties like gas permeability are low or do not mentioned, and also the quality uniformity is poor. Further, when the separator manufacture by the conventional methods are actually applied to the battery, there is a problem that it is not provide constant thermal stability under the conditions such as high temperature, high voltage and organic electrolytes.

### Disclosure of Invention

### Technical Problem

An object of the present invention is to provide a method of manufacturing a microporous polyolefin composite filmwhich has excellent permeability and also excellent thermal stability in high temperature, more particularly, to provide a method of manufacturing a microporous polyolefin composite film with a thermally stable layer at high temperature which has excellent stability in high temperature organic electrolytes, high meltdown temperature and lower shrinkage at high temperature.

### Technical Solution

To achieve the above objects, the present invention provides a method of manufacturing a microporous polyolefin composite film according to claim 1 with a thermally stable layer at high temperature, including (1) preparing a polyolefin microporous film using a composition containing a polyolefin resin; (2) coating a solution, in which a high heat-resistant resin is dissolved in a solvent, on one surface or both surfaces of the polyolefin microporous film; (3) phase-separating the polyolefin microporous film coated with the solution by contacting with a nonsolvent after the coating; and (4) drying the polyolefin microporous film so as to remove the solvent and nonsolvent remained after the phase-separating.

Further, the present invention provides a microporous polyolefin composite film according to claim 3 manufactured by the above described method.

Further, the present invention provides a separator for a lithium secondary battery, which includes the microporous polyolefin composite film with the thermally stable porous layer at high temperature.

Further, the present invention provides a lithium secondary battery having the separator which includes a microporous polyolefin composite film with the thermally stable porous layer at high temperature.

Hereinafter, the present invention will be described more fully.

The method of manufacturing a microporous polyolefin composite film of the present invention includes

(1) preparing a polyolefin microporous film using a composition containing a polyolefin resin;
(2) coating a solution, in which a high heat-resistant resin is dissolved in a solvent, on one surface or both surfaces of the polyolefin microporous film;
(3) phase-separating the polyolefin microporous film coated with the solution for a thermally stable layer by contacting with a nonsolvent after the coating; and
(4) drying the solvent and nonsolvent remained after the phase-separating so as to form a thermally stable porous layer at high temperature.

In the phase-separating, a method of forming the porous layer on one surface or both surfaces of the polyolefin microporous film is classified into pore forming method by phase-separation and a pore forming method by extraction, as follows:

(A) a method of coating a solution containing a polymer on one surface or both surfaces of the polyolefin microporous film, and inducing phase separation by cooling, and then drying or extracting a solvent to thereby form a porous structure.

(B) a method of coating on one surface or both surfaces of the polyolefin micro porous film a solution in which a polymer and organic or inorganic particles are mixed and dispersed, and then drying the solvent and extracting the organic or inorganic particles using other solvent to thereby form the porous structure.

(C) a method of coating a solution containing a polymer, a solvent and a nonsolvent on one surface or both surfaces of the polyolefin microporous film, and carrying out phase separation by drying the solvent, and removing the nonsolvent by drying or extracting to thereby form the porous structure.

(D) a method of coating a solution containing polymer on one surface or both surfaces of the polyolefin microporous film, and inducing phase separation by contacting with a nonsolvent, and then extracting a solvent and drying the solvent and the nonsolvent to thereby form a porous structure.

Generally, a coating layer forming method includes a process of forming the porous structure and a process of removing other materials except a material for forming the coating layer. A method of forming the porous structure is classified into a method by phase separation and a method of mixing and extracting other materials except the material for forming the coating layer. The method by phase separation is divided into vapor induced phase-separation, thermally induced phase-separation and nonsolvent induced phase-separation.

Further, a method of removing other materials except the material for forming the coating layer includes a drying method and an extracting method using a solvent which does not dissolve the material for forming the coating layer. Among the methods of forming the porous structure, the method (D) using the phase separation is relatively facile to form the porous structure and has excellent permeability and uniformity of product quality. Therefore, the present invention provides the microporous polyolefin composite film manufactured by the method in which the phase separation is induced by contacting with a nonsolvent so as to form the thermally stable layer at high temperature.

Speaking more detailed, it is preferable that the polyolefin microporous film is a single layer type or two or more laminated layers type formed of polyethylene, polypropylene, polybutylene, and a copolymer thereof or a copolymer in which alphaolefin comonomer having a carbon number of 5 to 8 is contained in the polyolefin, and a mixture thereof. The materials are not specially limited, but it is preferable to contain high density polyethylene and polypropylene for the purposes of facility of manufacturing the separator, high strength, proper shutdown temperature or high meltdown temperature. The proper shutdown temperature is 120 to 140°C. If the shutdown temperature is less than 120°C, the pores of the separator may be closed even by a relatively small temperature rise, and the battery is failed. If the shutdown temperature is more than 140°C, it is not possible to prevent the fire and explosion generated by boiling or decomposing of the organic electrolytes. It is preferable that the meltdown temperature is 140 to 200°C. If the meltdown temperature is less than 140°C, a temperature section, in which the pores are closed, is short when battery temperature is increased, and thus it is not possible to efficiently prevent the abnormal behavior of the battery, and if the meltdown temperature is more than 200°C, the efficiency is not improved corresponding to the increased temperature.

If necessary, some additives for particular purposes, such as antioxidant, UV stabilizer, and antistatic agent, may be added to the composition within a range that the characteristics of the separator are not deteriorated remarkably.

The polyolefin microporous film may contain organic or inorganic particles for the purposes of formation of the pores, enhancement of the heat resistance and impregnation of the organic electrolyte and the like. The organic particles include one or more of polyvinyldene fluoride (PVdF), polytetrafluoroethylene (PTFE), polyurethane, polymethylpentene (PMP), polyethylene terephthalate (PET), polycarbonate (PC), polyester, polyvinyl alcohol (PVA), polyacrylonitrile (PAN), polymethylene oxide (PMO), polymethyl methacrylate (PMMA), polyethylene oxide (PEO), cellulose and so on, and the inorganic particles include one or more of an oxide, a hydroxide, a sulfide, a nitride, a carbide and the like of at least one of metallic or semiconductor elements such as Si, Al, Ca, Ti, B, Sn, Mg, Li, Co, Ni, Sr, Ce, Zr, Y, Pb, Zn, Ba. Further, Alone or a mixture of the organic and inorganic particles as well as the organic particles and the inorganic particles may be used.

There is not limitation in the method of manufacturing the polyolefin microporous film, but it is preferable to include one or more following processes:

(a) a process of melting and mixing a polyolefin resin in an organic solvent which, can be mixed with polyolefin resin at high temperature, so as to form a sheet, and stretching the sheet after phase-separating so as to form a film, and extracting the organic solvent by using a volatile solvent, and then drying and heat-setting the film.

(b) a process of melting a polyolefin resin so as to form a sheet, and stretching the sheet at low or high temperature so as to exfoliate an interface between crystals and form film and pores, and then heat-setting the film.

(c) a process of mixing organic or inorganic particles having a higher melting temperature than the polyolefin resin and stretching a sheet so as to exfoliate an interface between the resin and the particle and form film and pores, and extracting the particles or heat-setting the film in a state of containing the particles.

In order to enhance the heat resistance and strength of the polyolefin microporous film and also enhance the stability in the organic electrolytes, a process of mixing monomer or oligomer having an unsaturated bonding group, and polymerizing and chemically cross-linking the mixture by using heat energy or ionizing radiation, or cross-linking the polyolefin alone or together with an initiator by using the ionizing radiation and the like may be included.

The cross-linking can be carried out at any time, e.g., after forming the sheet, before and after the stretching, before and after the extracting, and before and after the heat-setting, within a range that the basic physical properties of the polyolefin are not deteriorated.

Meanwhile, before forming the coating layer on the polyolefin microporous film, a process of graft polymerizing polar monomer, oligomer or polymer by using the ionizing radiation so as to reform a surface of the film, or a process of plasma-treating a surface of the film in a vacuum or normal pressure by using proper carrier and reaction gas so as to reform the surface may be included in order to increase surface energy for the purposes of increase in the impregnation rate of the organic electrolyte and enhancement of the bonding force between the coating layer and the polyolefin film.

Further, an adhesive component for improving the bonding force with the coating layer may be coated on the polyolefin microporous film before coating the coating layer. A monomer, oligomer or polymer material may be used as an adhesive, and any material and process for improving the bonding force may be used with a range that the permeability described in the claims is not deteriorated.

Preferably, the polyolefin microporous film has a porosity of 30 to 60%, a thickness of 5 to 30$\mu$m, and an average pore size of 0.01 to 0.5$\mu$m. If the porosity is lower or the thickness is large, or if the average pore size is too small, it is not possible to secure a passage for ions, and thus a resistance in the battery may be increased. In reverse case, it is difficult to expect securing of stability against the electrical short. In order to secure the sufficient stability in the battery, preferably, the polyolefin microporous film has a gas permeability is $1.5x(10^{-5})$ to $20.0x(10^{-5})$ Darcy, a tensile strength of 500 to 3,000kg/cm$^2$, a shutdown temperature of 120 to 140°C and a meltdown temperature of 140 to 200°C.

The method of forming the thermally stable porous layer at high temperature on one surface or both surfaces of the polyolefin microporous film is as follows.

The method of forming the thermally stable porous layer at high temperature, includes

(a) preparing a coating solution containing one or more kinds of heat-resistant resins having aromatic ring in main chain and also a melting temperature or a glass transition temperature of 170 to 500°C;
(b) coating the coating solution on one surface or both surfaces of the polyolefin microporous film so as to form a coating layer;
(c) phase-separating the polyolefin microporous film having the coating layer by contacting with a nonsolvent of the resin in the coating solution, and extracting a solvent into the nonsolvent; and
(4) drying the solvent and the nonsolvent.

It is preferable that the polymer in the coating layer has a melting temperature or a glass transition temperature of 170 to 500°C. If the melting temperature is less than 170°C, it is not possible to secure the thermal stability enough to endure a rapid rise in temperature, and if the melting temperature is more than 500°C, too much energy is consumed when dissolving the polymer and the thermal stability at high temperature is no longer enhanced. Preferably, the polymer contains aromatic ring in main chain. In this case, since the melting temperature or the glass transition temperature is increased due to increase in rigidity of the polymer chain, the heat resistance is increased. Further, due to the hydrophobicity of the aromatic ring, the polymer is not easily dissolved or gelled in an organic solvent such as propylene carbonate, ethylene carbonate, diethyl carbonate, dimethyl carbonate, and ethyl methyl carbonate, which is used as a non-aqueous electrolyte of a battery, and the coating layer is stably maintained at high voltage and high temperature when applied to the battery.

The heat-resistant polymer of the layer has a melting temperature or a glass transition temperature of 170 to 500°C and is not limited specially if it contains aromatic ring in main chain. Preferably, the heat-resistant polymer contains one or more of polyamide, polyimide, polyamideimide, polyethylene terephthalate, polycarbonate, polyarylate, polyetherimide, polyphenylene sulfone, polysulfone and so on. A large amount of soluble solvents are contained, and it is preferable to use polycarbonate or polyarylate which is relatively stable in the organic electrolytes. A concentration of the heat-resistant polymer in the coating solution is not limited particularly, if it is proper to express the above-mentioned characteristics of the microporous composite film, but is preferably 1 to 50wt%, more preferably, 2 to 20wt%. If the concentration of the heat-resistant polymer is too low, it is difficult to form the coating layer having a sufficient thickness and uniform pores, and thus it is not possible to enhance the thermal stability of the separator. If the concentration is too high, it is difficult to form the coating layer having a sufficient permeability, and thus the performance of the battery is deteriorated due to increase of the resistance.

If necessary, some additives for particular purposes, such as antioxidant, UV stabilizer, and antistatic agent, may be added to the composition of the coating layer within a range that the characteristics of the separator are not deteriorated remarkably.

Further, a composition for the coating layer may contain organic or inorganic particles for the purposes of increase in the impregnation rate of the liquid electrolytes with respect to the separator, increase in the physical strength of the coating layer, increase in the porosity of the coating layer, increase in the heat resistance of the separator, and prevention of the electrical short by securing a space between electrodes upon an abnormal condition of the battery. The organic particles including one or more of polyvinyldene fluoride (PVdF), polytetrafluoroethylene (PTFE), polyurethane, polymethylpentene (PMP), polyethylene terephthalate (PET), polycarbonate (PC), polyester, polyvinyl alcohol (PVA), polyacrylonitrile (PAN), polymethylene oxide (PMO), polymethyl methacrylate (PMMA), polyethylene oxide (PEO), cellulose and so on, and the inorganic particles including one or more of an oxide, a hydroxide, a sulfide, a nitride, a carbide and the like of at least one of metallic or semiconductor elements such as Si, Al, Ca, Ti, B, Sn, Mg, Li, Co, Ni, Sr, Ce, Zr, Y, Pb, Zn, Ba, or alone or a mixture of the organic and inorganic particles may be used. The particle size is 0.01 to $2\mu$m, more preferably, 0.05 to $1\mu$m. If the particle size is less than $0.01\mu$m, the particles may close up pores in the surface of the polyolefin microporous film and thus the permeability may be deteriorated, or otherwise the particles may be buried in the polymer after the phase separation and thus characteristic of the particles may be not expressed. On the other hand, if the particle size is more than $2\mu$m, a final separator may have a non-uniform thickness, and it is difficult to secure the bonding force with the polyolefin microporous film, and also since the efficiency is lowered due to reduction of a surface area, there is difficulty in dispersion. Further, the concentration of the organic or inorganic particle in the coating solution is preferably 1 to 50wt%, more preferably, 2 to 20wt%. If the concentration of the organic or inorganic particle is too low, it is difficult to achieve its purposes of increase in the impregnation rate of the liquid electrolytes with respect to the separator, increase in the physical strength of the coating layer, increase in the porosity of the coating layer, increase in the heat resistance of the separator, and prevention of the electrical short by securing a space between electrodes upon an abnormal condition of the battery. If the concentration of the organic or inorganic particle is too high, the bonding force with the polyolefin microporous film is deteriorated due to relative reduction of the concentration of the heat-resistant polymer, and thus it is difficult to secure the heat resistance of the separator.

In order to enhance the heat resistance and strength of the polyolefin microporous film and also enhance the stability in the organic electrolytes, a process of mixing monomer or oligomer having an unsaturated bonding group, and polymerizing and chemically cross-linking the mixture by using heat energy or ionizing radiation, or cross-linking the polyolefin alone or together with an initiator by using the ionizing radiation and the like may be included.

The heat-resistant polymer is dissolved in the organic solvent and then coated in the form of a solution. The organic solvent is not limited specially, if it can dissolve the heat-resistant polymer, and includes one or more of N,N-dimethylformamide (DMF), N-methyl-2-pyrrolidone (NMP), N,N-dimethylacetamide (DMAc), dimethylsulfoxide (DMSO), benzene, toluene, phenol, cresol, pyridine, chlorobenzene, dichlorobenzene, dioxane, dioxolane, acetone, methylethylketone (MEK), cyclohexanone, chloroform, tetrahydrofuran (THF), dichloroethane, dichloroethylene, trichloroethane, thrichloroethylene, dichloromethane (MC), ethyl acetate and the like. It is preferable to use a solvent having a relatively low vapor pressure and thus having low volatility in controlling the composition for the coating layer and the porous structure.

In case of using the organic or inorganic particles, the organic or inorganic particles are dispersed by using the organic solvent. A higher polar solvent may be used in order to increase the dispersive ability of the particles. For example, the solvent may include water, alcohol, diol, ether, glycol, carbonate, ketone, phthalate and so on, and a mixture thereof.

The nonsolvent which is used for the phase separation and the extraction functions to solidify the polymer and thus induce the phase separation, and it is not limited specially, if it can be mixed with the solvent. The nonsolvent includes water, alcohol, diol, hydrocarbon, ether, glycol, carbonate, ketone, phthalate, and a mixture thereof. In the method of the present invention, in which the phase separation is induced by the nonsolvent and the nonsolvent is removed by the drying, it is preferable to use a volatile nonsolvent having a high vapor pressure.

A method of coating one surface or both surfaces or an internal portion of the polyolefin microporous film with the heat-resistant resin solution prepared by above-mentioned method, which is not limited particularly, includes a bar coating method, a rod coating method, a die coating method, a comma coating method, a micro gravure/ gravure method, a dip coating method, a spray method, a spin method and a mixed method thereof. After that, a process of removing a part of the coating layer using a doctor blade or an air knife.

During or after forming the coating layer on the polyolefin microporous film, a process of graft polymerizing polar monomer, oligomer or polymer by using the ionizing radiation so as to reform a surface of the film, or a process of plasma-treating a surface of the film in a vacuum or normal pressure by using proper carrier and reaction gas so as to reform the surface may be included in order to increase surface energy for the purposes of increase in the impregnation rate of the organic electrolytes used when applied to the battery.

The microporous polyolefin composite film of the present invention has the following characteristics: the entire composite film including the coating layer has a permeability of $1.5 \times 10^{-5}$ to $20.0 \times 10^{-5}$ Darcy, a meltdown temperature of 160 to 300°C, a machine direction(MD) and a transverse direction(TD) shrinkage of 1 to 40% at a temperature of 150°C for 60 minutes.

Preferably, in order to provide such physical properties, an entire thickness of the coating layer is 0.1 to 1.0 times that of the polyolefin microporous film, and a bonding force between the coating layer and the polyolefin microporous film is 0.1 to 1.0kgf/cm.

Meanwhile, in case that the heat-resistant resin of the coating layer does not form a porous structure or closes up the pores of the polyolefin microporous film during the coating process, the gas and ion permeability is deteriorated, and thus electric characteristics of the battery such as high-rate characteristic, charging and discharging characteristic, low-temperature characteristic and cyclability are lowered. At this time, a gas permeability is $1.5 \times 10^{-5}$ to $20.0 \times 10^{-5}$ Darcy, preferably, $2.0 \times 10^{-5}$ to $10.0 \times 10^{-5}$ Darcy. If the gas permeability is less than $1.5 \times 10^{-5}$ Darcy, the ion permeability is lowered, and thus the electric characteristics are deteriorated, and if the gas permeability is more than $10.0 \times 10^{-5}$ Darcy, the gas permeability is too high, and thus safety of the battery is lowered. It is preferable that the entire thickness of the polymer coating layer is 0.1 to 1.0 times, more preferably, 0.2 to 0.6 times that of the polyolefin microporous film. If the entire thickness of the heat-resistant resin coating layer is less than 0.1times, it is not possible to prevent the heat shrinkage and fracture at high temperature, and if entire thickness of the polymer coating layer is more than 1.0 times, strength of the entire microporous film may be lowered due to lower strength of the coating layer than the stretched polyolefin microporous film, and this may result in deterioration of stability of the battery.

Further, if a pore size of the coating layer having a thick thickness is not properly controlled, it may exert an influence on power and long-term performance of the battery.

In order to enhance the thermal stability of the lithium secondary battery, it is preferable that the separator has high meltdown temperature.

In the present invention, the separator has a meltdown temperature of 160 to 300°C. The meltdown temperature is affected by thermal property of a separator material and stability in the organic electrolytes. The polyethylene microporous film has a meltdown temperature of 140 to 150°C due to a limitation of a melting point thereof. Even in case of a separator containing a high heat-resistant fluorine resin having a melting temperature of a glass transition temperature of 170 to 500°C or a highly crystalline resin having a strong hydrogen bond, it is difficult that the meltdown temperature is increased to 160°C or more when dissolved or gelled in the organic electrolytes. Since the coating layer contains aromatic ring in main chain, the microporous polyolefin composite film of the present invention has excellent thermal property, and since the microporous polyolefin composite film is stable with respect to the organic electrolytes due to the hydrophobicity of the aromatic ring having hydrocarbon group, it has a high meltdown temperature. Therefore, if a polymer containing aromatic chain having a melting temperature of a glass transition temperature of 170°C or more is coated on the polyolefin microporous film, the meltdown temperature is increased to 160°C or more. Therefore, if the meltdown temperature of the composite film is 160°C or less, the thermal property of the composite film is deteriorated, and if the meltdown temperature is 300°C or more, the efficiency is no longer improved corresponding to the rise in temperature.

The MD/TD shrinkage is 1 to 40%, preferably, 2 to 30% at a temperature of 150°C for 60 minutes. Like in the meltdown temperature, the MD/TD shrinkage at a temperature of 150°C shows the high temperature stability of the separator. If the shrinkage is less than 1%, as internal temperature of the battery is increased, the heat shrinkage occurs. Thus, the two electrodes are exposed and an electrical short occurs between the electrodes, and fire and explosion occur. If the shrinkage is more than 40%, the physical properties are deteriorated due to the excessive heat shrinkage. The MD/TD shrinkage is affected by the thermal property of the separator material and an orientation degree of the resin. The coating layer of the present invention is characterized by an excellent shrinkage at high temperature since a coating material has high thermal property and the resin of the coating layer has a low orientation degree. In order to obtain the shrinkage , it is preferable that a bonding force between the coating layer and the polyolefin microporous film is 0.1 to 1.0kgf/cm. Although the coating layer has the excellent heat resistance and shrinkage at high temperature, is the bonding force is less than 0.1kgf/cm, it is not possible to prevent the shrinkage of the polyolefin microporous film, and a risk of the electrical short in the battery is increased. If the bonding force is more than 1.0kgf/cm, the increased bonding force is not led to an effect of reducing the shrinkage.

**Advantageous Effects**

As described above, the microporous polyolefin composite film with a thermally stable porous layer at high temperature manufactured by the method of the present invention has excellent permeability and high thermal stability at high temperature, and particularly, since it has excellent stability of the coating layer in high temperature organic eletrolytes, it has a high meltdown temperature and a lower shrinkage at high temperature.

Further, the microporous polyolefin composite film with a thermally stable porous layer at high temperature manufactured by the method of the present invention has excellent quality uniformity and wide application range, and thus it can show an excellent effect when applied to a high capacity/high power battery.

Further, since the present invention provide the excellent permeability and heat resistance by sequentially forming a coating layer after manufacturing the microporous film, it is possible to provide the microporous polyolefin composite film with a thermally stable porous layer at high temperature having excellent effect by a simple method.

**Brief Description of Drawings**

The above and other objects, features and advantages of the present invention will become apparent from the following description of preferred embodiments given in conjunction with the accompanying drawings, in which:

Fig. 1 is a photograph of a scanning electron microscope (10,000 magnifications) showing a surface of a microporous film according to a first example of the present invention.
Fig. 2 is a photograph of a scanning electron microscope (10,000 magnifications) showing a surface of a microporous film according to a second example of the present invention.
Fig. 3 is a photograph of a scanning electron microscope (10,000 magnifications) showing a surface of a microporous film according to a first comparative example.
Fig. 4 a photograph of a scanning electron microscope (10,000 magnifications) showing a surface of a microporous film according to a fourth comparative example.

**Best Mode for Carrying out the Invention**

Hereinafter, the examples of the present invention will be described in detail with reference to accompanying drawings.

[Examples]

Characteristics of a microporous polyolefin composite film of the present invention are estimated by the following test method.

(1)Thickness of a film and coating layer

A contact type thickness measuring device having a precision of 0.1$\mu$m with respect to a thickness is used, and values that three points or more in a TDand ten points or more in a MD are measured with respect to the microporous polyolefin composite film are used. A thickness of the coating layer is measured from a difference between a thickness of the microporous film before the coating and a thickness of the microporous film after the coating. In case of the microporous film of which both surfaces are coated with the coating layer, a half of the difference between the thickness before coating and thickness after the coating is used as the thickness of the microporous film.

(2)Porosity (%)

A porosity is calculated by the following equation 1 using a rectangular sample of Acm x Bcm. In all of the samples, A, B is within a range of 5 to 20cm.
$$[\text{Equation 1}]$$
$$\text{Porosity} = [\{(AxBxT)-(M \div \rho) \div (AxBxT)\}] x100$$

wherein T = thickness (cm) of separator,
M = weight (g) of sample, and
= a density (g/cm$^3$) of resin.

(3)Pore size and particle size

A pore size is measured using a porometer (PMI company) in a half-dry method based on ASTM F316-03. An organic/inorganic particle size is measured from an apparent pore size calculated from a photograph of a scanning electron microscope with respect to the film surface.

(4)Gas permeability (Darcy)

A gas permeability is measured using a porometer (CFP-1500-AEL of PMI company). In general, the gas permeability is represented by a Gurley number, but since an influence by the film thickness is not compensated in the Gurley number, it is difficult to know a relative permeability according to a pore structure of the film. To solve the problem, the present invention uses Darcy's permeability constant. The Darcy's permeability constant is calculated from an equation 2, and nitrogen is used.

[Equation 2]

$$C = (8 \, F \, T \, V) / (\pi D^2 (P^2 - 1))$$

wherein C = Darcy's permeability constant,
F = flow rate
T = thickness of sample
V = viscosity (0.185 for $N_2$) of gas
D = diameter of sample
P = pressure

The present invention uses an average value of the Darcy's permeability constants in a range of 100 to 200psi.

(5)Puncture strength (N/$\mu$m)

A puncture strength is measured using UTM (Universal Test Machine) 3345 fabricated by INSTRON company, when pressing the sample at a speed of 120mm/min. At this time, a pin has a diameter of 1.0mm, and a pin tip has a radius of curvature 0.5mm.

[Equation 4]

Puncture strength (N/$\mu$m) = measuring load (N) thickness ($\mu$m) of separator

(6)A tensile strength is measured in accordance with ASTM D882.
(7) For a bonding force, a 180°exfoliation bonding strength is measured on the basis of JIS K 6854-2. The bonding strength is measured using UTM (Universal Test Machine) 3345 fabricated by INSTRON company, when pulling the sample having a width of 25mm at a speed of 100mm/min. An average value of the bonding strength generated upon the exfoliation is used.
(8) A shrinkage is obtained by measuring MD/TD shrinkages in percent, after the microporous polyolefin composite film is kept for 60 minutes at a temperature of 150°C.

(9) Shutdown temperature and meltdown temperature

Shutdown temperature and meltdown temperature of the microporous polyolefin composite film is measured in a simple cell which can measure impedance. In the simple cell, the microporous polyolefin composite film is interposed between two graphite electrodes, and electrolytes is injected. An electrical resistance is measured, while temperature is increased from 25 to 200°C at a rate of 5°C/min by using an alternating current of 1kHz. At this time, a temperature in which the electrical resistance is rapidly increased to a few hundreds to a few thousands $\Omega$ or more is selected as the closing temperature, and a temperature in which the electrical resistance is again reduced to 100 $\Omega$ or less is selected as the meltdown temperature. And the electrolyte in which 1M lithium hexafluorophosphate (LiPF$_6$) is dissolved in a solution that ethylene carbonate and propylene carbonate are mixed in a weight ratio of 1:1 is used.

(10) Hot box test

A battery is fabricated by using the microporous polyolefin composite film as the separator. After an anode in which LiCoO$_2$ is used as an active material and a cathode in which graphite carbon is used as an active material are wound together with the separator and then put into an aluminum pack, the electrolyte in which 1M lithium hexafluorophosphate (LiPF$_6$) is dissolved in a solution that ethylene carbonate and dimethyl carbonate are mixed in a weight ratio of 1:1 is injected therein, and then the aluminum pack is sealed, whereby a battery is assembled. The assembled battery is put into an oven, and the temperature is increased to a temperature of 150°C at a rate of 5°C/min, and then while the battery is left for 30 minutes, a change in the battery is observed and measured.

Example 1] (not according to the invention)

In order to prepare the polyolefin microporous film, high density polyethylene having a weight average molecular weight of $3.8 \times 10^5$ is used, and a mixture in which dibutyl phthalate and paraffin oil (kinematic viscosity at 40°C: 160cSt) is mixed at a rate of 1:2 is used as a diluent, and each content of the polyethylene and the diluent is 30wt% and 70wt%, respectively.

This composition is extruded at a temperature of 240°C using a dual-axial compounder having a T-die, and passed through an area, of which temperature is set to 180°C, so as to induce a phase separation, and then a sheet is prepared using a casting roll. The sheet is prepared by a successive bi-axial stretching method in which a stretching rate is six times in each of a MD and a TD, and a stretching temperature is 121°C. Herein, a heat-setting temperature is 128°C, and a heat-setting width is 1-1.2-1.1. A final film has a thickness of $16 \mu$m and a gas permeability of $3.5 \times 10^{-5}$ Darcy.

A solution for forming the coating layer is prepared by dissolving polycarbonate having a melting temperature of 231°C in DMF solvent. In a composition of the solution, resin/solvent is 13/87wt%. One surface is coated by the bar coating method. The coated film is dried in an oven of 50°C for 3minutes, and impregnated with ethanol nonsolvent and then dried again in an oven of 60°C for 30minutes.

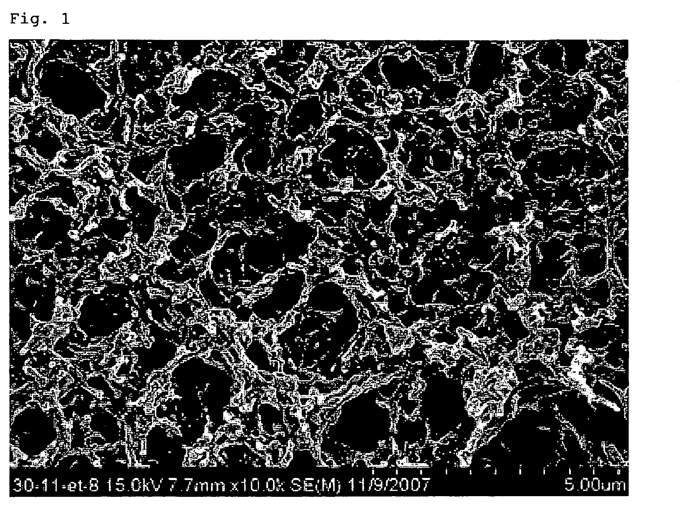

A photograph of a scanning electron microscope showing a surface of the manufactured microporous polyolefin composite film is illustrated in Fig. 1.

[Example 2] (not according to the invention)

The same the polyolefin microporous film as in the example 1 is used, and the solution for forming the coating layer is prepared by dissolving polyarylate (PAR) having a glass transition temperature of 201°C in NMP solvent. In the composition of the solution, resin/solvent is 11/89wt%. One surface is coated by the bar coating method, and the coated film is dried in an oven of 50°C for 2minutes, and impregnated with ethanol nonsolvent and then dried again in an oven of 60°C for 30minutes.

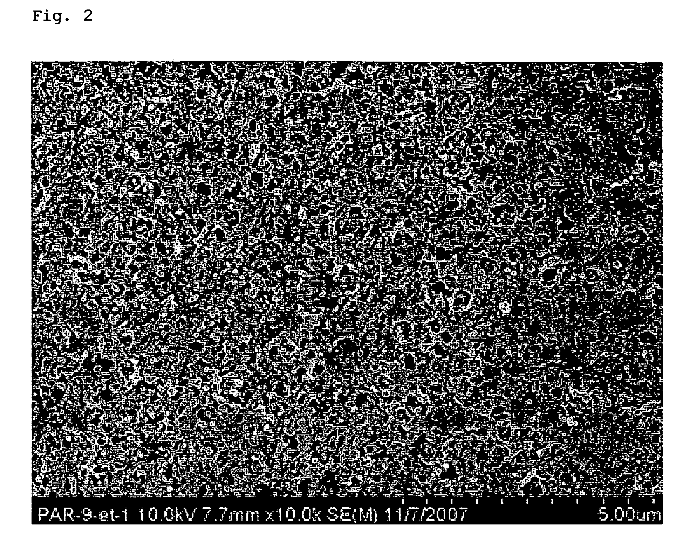

A photograph of a scanning electron microscope showing a surface of the manufactured microporous polyolefin composite film is illustrated in Fig. 2.

[Example 3] (not according to the invention)

The same the polyolefin microporous film as in the example 1 is used, and the solution for forming the coating layer is prepared by dissolving polyetherimide (PEI) having a glass transition temperature of 217°C in NMP solvent. In the composition of the solution, resin/solvent is 13/87wt%. One surface is coated by the bar coating method, and the coated film is dried in an oven of 50°C for 2minutes, and impregnated with iso-propanol nonsolvent and then dried again in an oven of 60°C for 30minutes.

[Example 4]

The same the polyolefin microporous film as in the example 1 is used, and the solution for forming the coating layer is prepared by dissolving and dispersing polysulfone (PSf) having a glass transition temperature of 189°C and silica ($SiO_2$, average particle size of 400nm) which is surface-treated with 3-methacryloxypropyltrimethoxysilane ($\gamma$-MPS) in THF solvent. In the composition of the solution, resin/particle/solvent is 10/25/65wt%. One surface is coated by the bar coating method, and the coated film is dried in an oven of 50°C for 3minutes, and impregnated with iso-propanol nonsolvent and then dried again in an oven of 60°C for 30minutes.

[Example 5] (not according to the invention)

The same the polyolefin microporous film as in the example 1 is used. Before forming the coating layer, plasma is discharged at atmospheric pressure for three seconds on the surface, on which the coating layer is formed, using nitrogen carrier gas and oxygen reaction gas. The solution for forming the coating layer is prepared by dissolving polycarbonate (PC) having a melting temperature of 231°C in NMP solvent. In the composition of the solution, resin/solvent is 13/87wt%. One surface is coated by the bar coating method, and the coated film is dried in an oven of 50°C for 3minutes, and impregnated with ethanol nonsolvent and then dried again in an oven of 60°C for 30minutes.

[Comparative example 1]

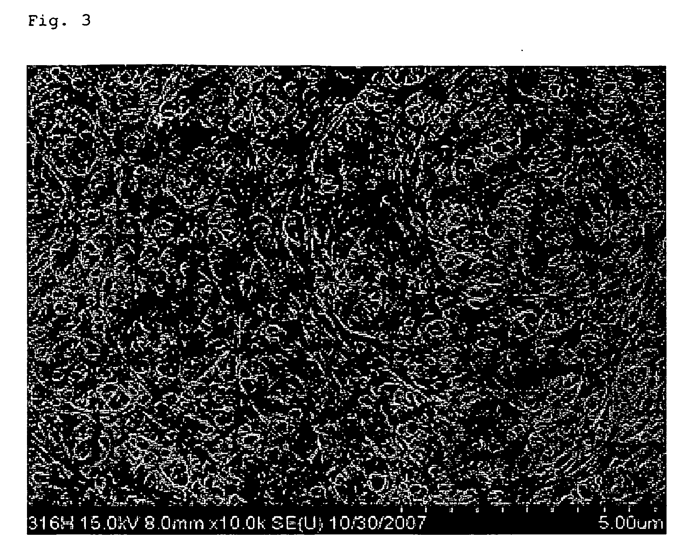

In order to prepare the polyolefin microporous film, high density polyethylene having a weight average molecular

weight of $3.8 \times 10^5$ is used, and a mixture in which dibutyl phthalate and paraffin oil (kinematic viscosity at 40°C: 160cSt) is mixed at a rate of 1:2 is used as a diluent, and each content of the polyethylene and the diluent is 30wt% and 70wt%, respectively. This composition is extruded at a temperature of 240°C using a dual-axial compounder having a T-die, and passed through an area, of which temperature is set to 180°C, so as to induce a phase separation, and then a sheet is prepared using a casting roll. The sheet is prepared by a successive bi-axial stretching method in which a stretching rate is six times in each of a machine direction (MD) and a transverse direction (TD), and a stretching temperature is 121°C. Herein, a heat-setting temperature is 128°C, and a heat-setting width is 1-1.2-1.1. A final film has a thickness of 16 $\mu$m and a gas permeability of $3.5 \times 10^{-5}$ Darcy, and the coating layer is not coated. A photograph of a scanning electron microscope showing a surface of the manufactured polyolefin microporous film is illustrated in Fig. 3.

[Comparative example 2]

The same the polyolefin microporous film as in the comparative example 1 is used, and the solution for forming the coating layer is prepared by dissolving non-aromatic polyvinyldene fluoride-hexafluoropropylene (P(VdF-co-HFP)) having a melting temperature of 160°C in NMP solvent. In the composition of the solution, resin/solvent is 13/87wt%. One surface is coated by the bar coating method, and the coated film is dried in an oven of 50°C for 3minutes, and impregnated with ethanol nonsolvent and then dried again in an oven of 60°C for 30minutes.

[Comparative example 3]

The same the polyolefin microporous film as in the example 1 is used, and the solution for forming the coating layer is prepared by dissolving non-aromatic cellulose acetate having a glass transition temperature of 190°C in NMP solvent. In the composition of the solution, resin/solvent is 13/87wt%. One surface is coated by the bar coating method, and the coated film is dried in an oven of 50°C for 3minutes, and impregnated with ethanol nonsolvent and then dried again in an oven of 60°C for 30minutes.

[Comparative example 4]

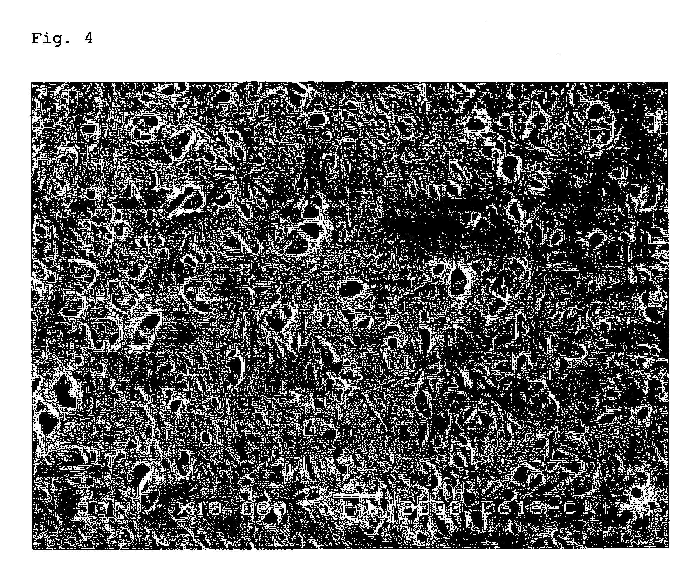

The same the polyolefin microporous film as in the comparative example 1 is used, and the solution for forming the coating layer is prepared by dissolving polycarbonate (PC) having a melting temperature of 231°C in THF solvent and also adding pentanol nonsolvent. In the composition of the solution, resin/solvent/nonsolvent is 4/90/6wt%. One surface is coated by the bar coating method, and the coated film is dried in an oven of 50°C for 3 minutes and also an oven of 60°C for 30minutes. To form a porous structure, the phase separation by drying is carried out.
A photograph of a scanning electron microscope showing a surface of the manufactured microporous polyolefin composite film is illustrated in Fig. 4.

[Comparative example 5]

The same the polyolefin microporous film as in the example 1 is used, and the solution for forming the coating layer is prepared by dissolving polyetherimide (PEI) having a glass transition temperature of 217°C in NMP solvent. In the composition of the solution, resin/solvent is 8/92wt%. One surface is coated by the bar coating method, and the coated film is dried in an oven of 50°C for 1minutes, and impregnated with ethanol nonsolvent and then dried again in an oven of 60°C for 30minutes.
Testing conditions of the examples and the comparative examples and the results obtained therefrom are represented in table 1 and table 2.

[Table 1] Examples 1-3, 5 are not according to the invention

| | | unit | Example1 | Example2 | Example3 | Example4 | Example5 |
|---|---|---|---|---|---|---|---|
| Polyolefin microporous film | | - | PE | PE | PE | PE | PE |
| Heat resistant treatment | Resin (concentration) | (%) | PC(13) | PAR(11) | PEI(13) | PSf(10) + $SiO_2$(25) | PC(13) |
| | Solvent (concentration) | (%) | DMF (87) | NMP(89) | NMP(87) | THF(65) | NMP(87) |
| | Nonsolvent (concentration) | (%) | Ethanol | Ethanol | Iso-propanol | Iso-propanol | Ethanol |
| | Method of forming porous structure | - | Phase separation (nonsolvent impregnation) | Phase separation (nonsolvent impregnation) | Phase separation (nonsolvent impregnation) | Phase separation (nonsolvent - impregnation) | Plasma + phase separation (nonsolvent impregnation)) |
| Thickness of Polyolefin microporous film | | $\mu$m | 16.0 | 16.0 | 16.1 | 16.0 | 16.0 |
| Thickness of coating layer | | $\mu$m | 5.2 | 5.2 | 5.0 | 4.9 | 5.4 |
| Bonding strength | | Kgf/cm | 0.18 | 0.21 | 0.20 | 0.20 | 0.25 |
| Puncture strength | | N/$\mu$m | 0.22 | 0.20 | 0.19 | 0.21 | 0.21 |
| Tensile | MD | Kgf/cm$^2$ | 992 | 932 | 930 | 953 | 978 |
| strength | TD | Kgf/cm$^2$ | 793 | 728 | 721 | 742 | 770 |
| Gas permeability | | 10$^{-6}$ Darcy | 1.9 | 2.0 | 2.5 | 2.2 | 1.9 |
| Shrinkage. 150°C. 60minutes | MD | % | 25 | 23 | 19 | 26 | 16 |
| | TD | % | 20 | 18 | 15 | 21 | 13 |
| Shutdown temperature | | °C | 135 | 135 | 136 | 136 | 135 |
| Meltdown temperature | | °C | 181 | >190 | 189 | >178 | >190 |
| Hot box (150°C, 30minutes) | | - | Pass | Pass | Pass | Pass | Pass |

[Table 2]

| | | unit | Comparative example1 | Comparative example2 | Comparative example3 | Comparative example4 | Comparative example5 |
|---|---|---|---|---|---|---|---|
| Polyolefin microporous film | | - | PE | PE | PE | PE | PE |
| Heat resistant treatment | Resin (concentration) | (%) | - | P(dF-co-HFP)(13) | Cellulose acetate (13) | PC(4) | PEI(8) |
| | Solvent (concentration) | (%) | - | NMP(87) | NMP(87) | THF(90) | NMP(92) |
| | Nonsolvent (concentration) | (%) | - | Ethanol | Iso-propanol | Pentanol (6) | Ethanol |
| | Manufacturing | - | - | Phase separation (nonsolvent impregnation) | Phase separation (nonsolvent impregnation) | Phase separation (adding nonsolvent) | Phase separation (nonsolvent impregnation) |
| Thickness of Polyofefin microporous film | | $\mu$m | 16.0 | 15.9 | 16.0 | 16.0 | 16.0 |
| Thickness of coating layer | | $\mu$m | - | 5.2 | 4.8 | 5.5 | 5.2 |
| Bonding strength | | Kgf/cm | - | 0.19 | 0.21 | 0.29 | 0.07 |
| Puncture strength | | N/$\mu$m | 0.25 | 0.19 | 0.20 | 0.18 | 0.21 |
| Tensile strength | MD | Kgf/cm$^2$ | 1308 | 921 | 968 | 921 | 954 |
| | TD | Kgf/cm$^2$ | 1056 | 783 | 759 | 783 | 740 |
| Gas permeability | | $10^{-5}$ Darcy | 3.5 | 2.7 | 2.4 | 1.3 | 2.4 |
| Shrinkage, 150°C, 60minutes | MD | % | 70 | 38 | 21 | 18 | 50 |
| | TD | % | 61 | 28 | 15 | 13 | 43 |
| Shutdown temperature | | °C | 136 | 135 | 135 | 135 | 135 |
| Meltdown temperature | | °C | 145 | 155 | 157 | 189 | 161 |
| Hot box (150°C, 30minutes) | | - | Fail | Fail | Fail | Pass | Fail |

EP 2 260 523 B1

Those skilled in the art will appreciate that the conceptions and specific embodiments disclosed in the foregoing description may be readily utilized as a basis for modifying or designing other embodiments for carrying out the same purposes of the present invention. Those skilled in the art will also appreciate that such equivalent embodiments do not depart from the spirit and scope of the invention as set forth in the appended claims.

**Industrial Applicability**

As described above, the microporous polyolefin composite film with a thermally stable porous layer at high temperature manufactured by the method of the present invention has excellent permeability and high thermal stability at high temperature, and particularly, since it has excellent stability of the coating layer in high temperature organic electrolytes, it has a high meltdown temperature and a lower shrinkage at high temperature.

Further, the microporous polyolefin composite film with a thermally stable porous layer at high temperature manufactured by the method of the present invention has excellent quality uniformity and wide application range, and thus it can show an excellent effect when applied to a high capacity/high power battery.

Further, since the present invention provide the excellent permeability and heat resistance by sequentially forming a coating layer after manufacturing the microporous film, it is possible to provide the microporous polyolefin composite film with a thermally stable porous layer at high temperature having excellent effect by a simple method.

**Claims**

1. A method of manufacturing a microporous polyolefin composite film with a thermally stable layer at high temperature, comprising:

   preparing a polyolefin microporous film using a composition containing a polyolefin resin;
   coating a solution, in which a high heat-resistant resin dissolved in a solvent, on one surface or both surfaces of the polyolefin microporous film, wherein the solution in which the high heat-resistant resin is dissolved further contains organic or inorganic particles;
   phase-separating the polyolefin microporous film coated with the solution by contacting with a nonsolvent after the coating; and
   drying the polyolefin microporous film so as to remove the solvent and nonsolvent remained after.the phase-separating, and thus forming the thermally stable layer at high temperature,
   wherein the high heat-resistant resin is selected from the group consisting of polycarbonate, polyarylate, polyetherimide, polysulfone and a mixture thereof and
   wherein the polyolefin microporous film is selected from films formed of polyethylene, polypropylene, polybutylene, and a copolymer thereof, and a mixture thereof,
   wherein the thickness of the thermally stable layer at high temperature is 0.1 to 1.0 times that of the polyolefin microporous film, the bonding force between thermally stable layer and the polyolefin microporous film is 0.0098 to 0.098 Nm (0.1 to 1.0 kgf/cm), and the microporous polyolefin composite film including the thermally stable layer has a permeability of $1.5 \times 10^{-17}$ to $20.0 \times 10^{-17}$ m$^2$ ($1.5 \times 10^{-5}$ to $20.0 \times 10^{-5}$ Darcy), a meltdown temperature of 160 to 300°C, a MD/TD shrinkage of 1 to 40% at a temperature of 150°C for 60 minutes.

2. The method of manufacturing a microporous polyolefin composite film according to claim 1, wherein the organic or inorganic particles have a particle size of 0.01 to 2 $\mu$m.

3. A separator for a lithium secondary battery, comprising the microporous composite film obtainable by the method according to claim 1 or 2.

4. A lithium secondary battery comprising the separator according to claim 3.

**Patentansprüche**

1. Verfahren zur Herstellung eines mikroporösen Polyolefinverbundfilms mit einer bei hoher Temperatur thermisch stabilen Schicht, umfassend:

   Herstellen eines mikroporösen Polyolefinfilms unter Verwendung einer Zusammensetzung, die ein Polyolefinharz enthält;

Auftragen einer Lösung, in welcher ein Harz mit hoher Hitzebeständigkeit in einem Lösungsmittel gelöst ist, auf eine oder beide Oberfläche(n) des mikroporösen Polyolefinfilms, wobei die Lösung, in welcher das Harz mit hoher Hitzebeständigkeit gelöst ist, des Weiteren organische oder anorganische Partikel enthält;

Phasentrennung des mikroporösen Polyolefinfilms, der mit der Lösung beschichtet ist, durch Inkontaktbringen mit einem Nichtlösungsmittel nach dem Beschichten; und

Trocknen des mikroporösen Polyolefinfilms, so dass das Lösungsmittel entfernt wird und das Nichtlösungsmittel nach der Phasentrennung verbleibt, und somit Bilden der bei hoher Temperatur thermisch stabilen Schicht,

wobei das Harz mit hoher Hitzebeständigkeit ausgewählt ist aus der Gruppe, bestehend aus Polycarbonat, Polyarylat, Polyetherimid, Polysulfon und einer Mischung davon, und

wobei der mikroporöse Polyolefinfilm ausgewählt ist aus Filmen, gebildet aus Polyethylen, Polypropylen, Polybutylen und einem Copolymer derselben, und einer Mischung davon,

wobei die Dicke der bei hoher Temperatur thermisch stabilen Schicht 0,1- bis 1,0-mal diejenige des mikroporösen Polyolefinfilms ist, die Bindungskraft zwischen der thermisch stabilen Schicht und dem mikroporösen Polyolefinfilm 0,0098 bis 0,098 Nm (0,1 bis 1,0 kgf/cm) beträgt, und der mikroporöse Polyolefinverbundfilm, der die thermisch stabile Schicht umfasst, eine Permeabilität von $1,5x10^{-17}$ bis $20,0x10^{-17}$ m$^2$ ($1,5x10^{-5}$ bis $20,0x10^{-5}$ Darcy), eine Zusammenschmelztemperatur von 160 bis 300°C, eine MD/TD-Schrumpfung von 1 bis 40% bei einer Temperatur von 150°C für 60 Minuten aufweist.

**2.** Verfahren zur Herstellung eines mikroporösen Polyolefinverbundfilms gemäß Anspruch 1, wobei die organischen oder an-organischen Partikel eine Partikelgröße von 0,01 bis 2 $\mu$m aufweisen.

**3.** Trennelement für eine Lithiumbatterie, umfassend den mikroporösen Verbundfilm, erhältlich durch das Verfahren gemäß Anspruch 1 oder 2.

**4.** Lithiumbatterie, umfassend das Trennelement gemäß Anspruch 3.

**Revendications**

**1.** Procédé de fabrication d'un film composite microporeux de polyoléfine comprenant une couche thermiquement stable à haute température, comprenant :

la préparation d'un film microporeux de polyoléfine à l'aide d'une composition contenant une résine de polyoléfine ;

l'enduction d'une solution, dans laquelle une résine de grande résistance à la chaleur est dissoute dans un solvant, sur une surface ou sur les deux surfaces du film microporeux de polyoléfine, où la solution dans laquelle la résine de grande résistance à la chaleur est dissoute contient en outre des particules organiques ou inorganiques ;

la séparation de phases du film microporeux de polyoléfine revêtu de la solution par mise en contact avec un non solvant après l'enduction ; et

le séchage du film microporeux de polyoléfine de façon à éliminer le solvant et le non solvant restant après la séparation de phases et ainsi la formation de la couche thermiquement stable à haute température,

dans lequel la résine de grande résistance à la chaleur est choisie dans le groupe constitué du polycarbonate, du polyarylate, du polyétherimide, de la polysulfone et d'un mélange de ceux-ci, et

dans lequel le film microporeux de polyoléfine est choisi parmi les films faits de polyéthylène, de polypropylène, de polybutylène et d'un copolymère de ceux-ci, et d'un mélange de ceux-ci,

dans lequel l'épaisseur de la couche thermiquement stable à haute température est 0,1 à 1,0 fois celle du film microporeux de polyoléfine, la force de liaison entre la couche thermiquement stable et le film microporeux de polyoléfine est de 0,0098 à 0,098 Nm (0,1 à 1,0 kgf/cm) et le film composite microporeux de polyoléfine comprenant là couche thermiquement stable a une perméabilité de $1,5x10^{-17}$ à $20,0x10^{-17}$ m$^2$ ($1,5x10^{-5}$ à $20,0x10^{-5}$ darcys), une température de fusion de 160 à 300°C, un taux de rétrécissement MD/TD de 1 à 40 % à une température de 150°C pendant 60 minutes.

**2.** Procédé de fabrication d'un film composite microporeux de polyoléfine selon la revendication 1, dans lequel les particules organiques ou inorganiques ont une taille de particules de 0,01 à 2 $\mu$m.

**3.** Séparateur de batterie secondaire au lithium, comprenant le film composite microporeux susceptible d'être obtenu par le procédé selon la revendication 1 ou 2.

**4.** Batterie secondaire au lithium comprenant le séparateur selon la revendication 3.

Fig. 1

Fig. 2

PAR-9-et-1 10.0kV 7.7mm x10.0k SE(M) 11/7/2007        5.00um

Fig. 3

316H 15.0kV 8.0mm x10.0k SE(U) 10/30/2007                    5.00um

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6127438 A
- US 6562519 A
- US 6949315 B
- US 5641565 A
- JP 2004161899 A
- US 5691077 A
- JP 2002321323 A
- KR 20070080245
- WO 2005049318 A
- JP 2002355938 A